# EUROPÄISCHE PATENTANMELDUNG

(11) **EP 4 636 433 A1**
(43) Veröffentlichungstag der Anmeldung: **22.10.2025**
(21) Anmeldenummer: 25170263.5
(22) Anmeldetag: 14.04.2025
(51) Int. Cl.: G01S 7/02, G01S 7/481, G01S 13/931, G01S 17/931

(54) **AUSSENVERKLEIDUNGSTEILANORDNUNG FÜR EIN FAHRZEUG**

(30) Priorität: 18.04.2024 DE 102024110923
(71) Anmelder: RESRG Automotive SE & Co. KG, 95111 Rehau (DE)
(72) Erfinder: Hähnel, Gerd, 95111 Rehau (DE); Turbanisch, Fabian, 95111 Rehau (DE)

(57) **Zusammenfassung**

Die Erfindung betrifft Außenverkleidungsteilanordnung für ein Fahrzeug, umfassend eine Dekorblende (1), wobei die Dekorblende (1) bei bestimmungsgemäßer Verwendung am Fahrzeug eine sichtbare Außenseite (A) und eine der Außenseite (A) gegenüberliegende Innenseite (B) aufweist und, umfassend ein Umfeld-Detektionselement (S), wobei die Dekorblende (1) so vor dem Umfeld-Detektionselement (S) positioniert ist, dass das Umfeld-Detektionselement (S) der Innenseite (B) der Dekorblende (1) zugewandt ist, wobei die Dekorblende (1) aus einem flächig ausgebildeten Grundkörper (3) aus einem, für wenigsten eine Wellenlänge des sichtbaren Lichts transparenten oder transluzenten, Polymermaterial besteht, wobei die Dekorblende (1) ferner eine mit dem Grundkörper (3) stoffschlüssig verbundene Heizfolie (4) aufweist, wobei die Dekorblende (1) zusätzlich eine ein Dekor und/oder eine Farbe der Dekorblende (1) ausbildende Designfolie (6) aufweist, wobei die Designfolie (6) so auf dem Grundkörper (3) der Dekorblende (1) stoffschlüssig angeordnet ist, dass diese von der Außenseite (A) herkommend vor der Heizfolie (4) angeordnet ist.

## Beschreibung

Die vorliegende Erfindung betrifft eine Außenverkleidungsteilanordnung für ein Fahrzeug, umfassend eine Dekorblende, wobei die Dekorblende bei bestimmungsgemäßer Verwendung am Fahrzeug eine sichtbare Außenseite und eine der Außenseite gegenüberliegende Innenseite aufweist und, umfassend ein Umfeld-Detektionselement, wobei die Dekorblende so vor dem Umfeld-Detektionselement positioniert ist, dass das Umfeld-Detektionselement der Innenseite der Dekorblende zugewandt ist, wobei die Dekorblende aus einem flächig ausgebildeten Grundkörper aus einem, für wenigsten eine Wellenlänge des sichtbaren Lichts transparenten oder transluzenten, Polymermaterial besteht, wobei die Dekorblende ferner eine mit dem Grundkörper stoffschlüssig verbundene Heizfolie aufweist.

Eine derartige Außenverkleidungsteilanordnung für ein Fahrzeug ist aus der DE 10 2018 109 884 B4 vorbekannt. Nachteilig an bekannten

Außenverkleidungsteilanordnungen ist, dass die Heizfolie, und insbesondere die Leiterbahnen auf der Heizfolie, von der Außenseite her sichtbar sind.

Aufgabe der vorliegenden Erfindung ist es daher eine

Außenverkleidungsteilanordnung anzugeben, die einen verbesserte optischen Eindruck und eine verbesserte Ästhetik aufweist.

Diese Aufgabe wird vorliegend gelöst durch eine Außenverkleidungsteilanordnung für ein Fahrzeug, umfassend eine Dekorblende, wobei die Dekorblende bei bestimmungsgemäßer Verwendung am Fahrzeug eine sichtbare Außenseite und eine der Außenseite gegenüberliegende Innenseite aufweist und, umfassend ein Umfeld-Detektionselement, wobei die Dekorblende so vor dem Umfeld-Detektionselement positioniert ist, dass das Umfeld-Detektionselement der Innenseite der Dekorblende zugewandt ist, wobei die Dekorblende aus einem flächig ausgebildeten Grundkörper aus einem, für wenigsten eine Wellenlänge des sichtbaren Lichts transparenten oder transluzenten, Polymermaterial besteht, wobei die Dekorblende ferner eine mit dem Grundkörper stoffschlüssig verbundene Heizfolie aufweist, wobei die Dekorblende zusätzlich eine ein Dekor und/oder eine Farbe der Dekorblende ausbildende Designfolie aufweist, wobei die Designfolie so auf dem Grundkörper der Dekorblende stoffschlüssig angeordnet ist, dass diese von der Außenseite herkommend vor der Heizfolie angeordnet ist. Hierdurch ist nur die Designfolie von der Außenseite her erkennbar, wobei diese gleichzeitig die Heizfolie und/oder die Leiterbahnen auf der Heizfolie verdeckt.

Das sichtbare Licht, auch als Licht- oder Farbspektrum bezeichnet, ist der Teil des elektromagnetischen Spektrums, den das menschliche Auge wahrnehmen kann. Es reicht von Rot (etwa 760 nm) bis Violett (etwa 380 nm).

Es kann vorgesehen sein, dass die Heizfolie mit bestrombaren Leiterbahnen versehen ist und/oder das das Material der Heizfolie selbst sich bei einer Bestromung erwärmt.

Es kann vorgesehen sein, dass die Dekorblende zusätzlich bei einer Beleuchtung von der Innenseite her in wenigstens einem Leuchtbereich lokal durchleuchtbar ausgebildet ist.

Es kann vorgesehen sein, dass die Designfolie auf der zur Außenseite hin orientierten Seite des Grundkörpers angeordnet ist.

Es kann vorgesehen sein, dass die Heizfolie auf der zur Innenseite hin orientierten Seiten des Grundkörpers oder zwischen dem Grundkörper und der Designfolie angeordnet ist.

Es kann vorgesehen sein, dass die Dekorblende zusätzlich eine Antireflexionsschicht aufweist, wobei die Antireflexionsschicht dafür vorgesehen ist, dass die von dem Umfeld-Detektionselement abgegebene elektromagnetische Strahlung weitestgehend ungestört (Reflexionsverluste kleiner 25%) in die Dekorblende eindringen kann, wobei die Antireflexionsschicht auf der dem Umfeld-Detektionselement gegenüberliegenden Innenseite auf dem Grundkörper der Dekorblende angeordnet ist.

Es kann vorgesehen sein, dass diese Antireflexionsbeschichtung aus einem Material gebildet ist, das auf Polysiloxanbasis hergestellt ist. Alternativ kann die Antireflexionsbeschichtung aus einer Indium-Verbindung hergestellt sein.

Es kann vorgesehen sein, dass auf der Außenseite der Dekorblende eine Schutzschicht oder eine Schutzfolie vorgesehen ist. Die Schutzschicht oder die Schutzfolie kann beispielsweise ein Silan oder eine Silanverbindung umfassen. Die Schutzschicht oder die Schutzfolie kann insbesondere eine Beschädigung durch Steinschläge oder abrasive Medien vermindern.

Es kann vorgesehen sein, dass das Umfeld-Detektionselement ein Lidarsystem oder ein Radarsystem umfasst. Ein Lidarssytem (Abkürzung für englisch: Light detection and ranging oder Light imaging, detection and ranging) dient zur optischen Abstands- und Geschwindigkeitsmessung. Statt der Radiowellen wie beim Radar werden Laserstrahlen verwendet. Die Technologie wird auch in der Steuerung und Navigation autonomer Fahrzeuge verwendet. Ein typischer Lidarsensor sendet gepulste Lichtwellen in die Umgebung aus. Diese Pulse prallen von umgebenden Objekten ab und kehren zum Sensor zurück. Der Sensor verwendet die Zeit, die jeder Puls benötigt hat, um zum Sensor zurückzukehren, um beispielsweise die zurückgelegte Entfernung zu berechnen. Typische Wellenlängen liegen zwischen 905 nm bis 1800 nm, können jedoch je nach Anwendungsfall auch außerhalb dieses Bereichs liegen.

Es kann vorgesehen sein, dass die Dekorblende Teil einer Stoßfängerverkleidung oder Teil einer Türaußenverkleidung oder Teil einer Heckklappenaußenverkleidung oder Teil einer Kotflügelverkleidung oder Teil einer Frontmaske oder Teil einer Kühlerverkleidung ist. Eine Frontmaske ist derjenige Teil eines Fahrzeugs an deren Stelle sich bei Verbrennungsfahrzeugen der Kühlergrill befunden hat. Insbesondere bei Elektrofahrzeugen ist diese Frontmaske nicht mehr als Lufteinlass zu dem Kühler (den es hier nicht mehr gibt) ausgebildet, sondern als Designelement in der Fahrzeugmitte vorgesehen.

Es kann vorgesehen sein, dass das transparente oder transluzente Polymermaterial Polypropylen und/oder Polycarbonat und/oder Polyethylenterephthalat und/oder Acrylnitril-Butadien-Styrol und/oder Polymethylmethacrylat und/oder Polyamid umfasst.

Die Heizfolie und die Designfolie sind so ausgebildet, dass diese für ein Spritzgussverfahren geeignet sind, sich also insbesondere während des Einspritzvorgangs des den Grundkörper bildenden Polymermaterials stoffschlüssig mit diesem Polymermaterial verbinden können (ggf. unter Verwendung von Haftvermittlern) und die entsprechenden hohen Temperaturen verkraften. Dies gilt entsprechend für das auf der Designfolie aufgebrachte (beispielsweise per Siebdruck oder per Tintenstrahldruck oder per Tampondruck oder per Digitaldruck aufgebrachte) Dekor auf der Designfolie.

Teil der Erfindung ist ferner ein Fahrzeug mit einer vorstehend beschriebenen Außenverkleidungsteilanordnung.

Teil der Erfindung ist ferner ein Verfahren zur Herstellung einer Dekorblende einer wie vorstehend beschriebenen Außenverkleidungsteilanordnung, umfassend die folgenden Schritte:
- Bereitstellen einer Heizfolie;
- Bereitstellen einer Designfolie;
- Einbringen der Heizfolie und der Designfolie in eine die Dekorblende definierende Kavität eines Spritzgusswerkzeugs, wobei die Designfolie so in der Kavität angeordnet wird, dass diese beim Befüllen der Kavität mit einem Polymermaterial hinterspritzt wird und, wobei die Heizfolie so in der Kavität angeordnet wird, dass diese beim Befüllen der Kavität mit dem Polymermaterial überspritzt wird;
- Befüllen der Kavität des Spritzgusswerkzeugs mit einem transparent oder transluzent erstarrenden Polymermaterial;
- Aushärten des Polymermaterials zur Ausbildung des Grundkörpers mit den stoffschlüssig am Grundkörper angeformten Folien;
- Entnahme der Dekorblende aus dem Spritzgusswerkzeug.

Es kann vorgesehen sein, dass die Heizfolie und/oder die Designfolie vor dem Einbringen in die Kavität dreidimensional vorgeformt wird/werden oder bereits dreidimensional vorgeformt sind.

### Ausführungsbeispiele

Im Folgenden wird die Erfindung anhand lediglich Ausführungsbeispiele darstellender Zeichnungen erläutert. Es zeigen schematisch:
- Fig. 1: eine Frontansicht einer Außenverkleidungsteilanordnung;
- Fig. 2 und 3: Querschnittsdarstellungen entlang der Schnittlinie X-X aus Fig. 1 in zwei verschiedenen Varianten.

In den Figuren werden gleiche oder funktionsgleiche Elemente mit den gleichen Bezugszeichen versehen.

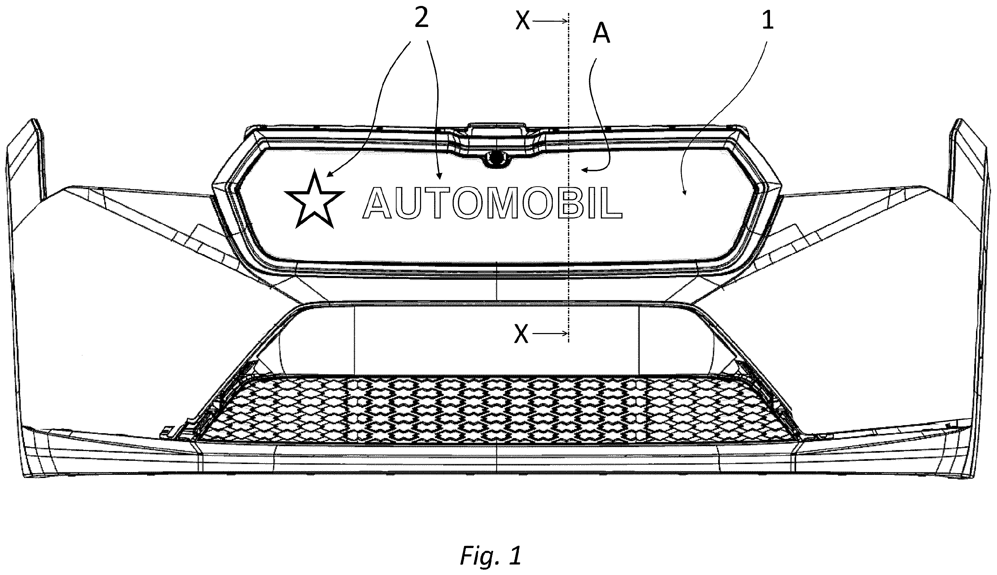

In der Fig. 1 ist eine Frontansicht eine erfindungsgemäße

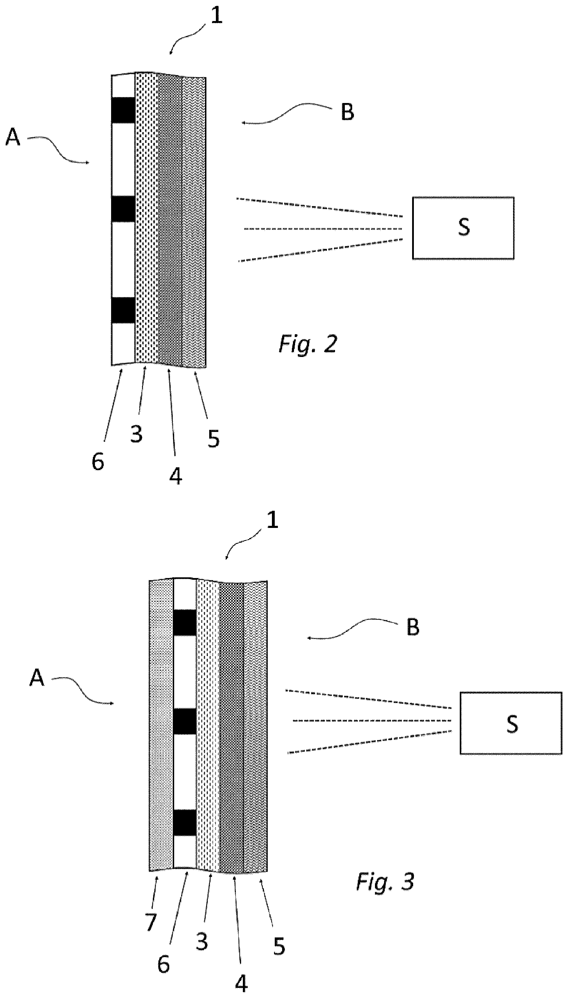

Außenverkleidungsteilanordnung für ein Fahrzeug dargestellt. Die Außenverkleidungsteilanordnung für ein Fahrzeug, umfasst:
- eine Dekorblende 1, wobei die Dekorblende 1 bei bestimmungsgemäßer Verwendung am Fahrzeug eine sichtbare Außenseite A und eine der Außenseite A gegenüberliegende Innenseite B aufweist und, umfasst
- ein Umfeld-Detektionselement S, wobei die Dekorblende 1 so vor dem Umfeld-Detektionselement S positioniert ist, dass das Umfeld-Detektionselement S der Innenseite B der Dekorblende 1 zugewandt ist (vgl. Fig. 2 oder Fig. 3).

Die Dekorblende 1 besteht aus einem flächig ausgebildeten Grundkörper 3 aus einem, für wenigsten eine Wellenlänge des sichtbaren Lichts transparenten oder transluzenten, Polymermaterial. Die Dekorblende 1 weist ferner eine mit dem Grundkörper 3 stoffschlüssig verbundene Heizfolie 4 auf.

Die Dekorblende 1 weist zusätzlich eine ein Dekor und/oder eine Farbe der Dekorblende 1 ausbildende Designfolie 6 auf, wobei die Designfolie 6 so auf dem Grundkörper 3 der Dekorblende 1 stoffschlüssig angeordnet ist, dass diese von der Außenseite A herkommend vor der Heizfolie 4 angeordnet ist.

Die Designfolie 6 ist in diesen Ausführungsbeispielen gemäß Fig. 2 oder Fig. 3 auf der zur Außenseite A hin orientierten Seite des Grundkörpers 3 angeordnet.

Die Heizfolie ist 4 in diesen Ausführungsbeispielen auf der zur Innenseite B hin orientierten Seite des Grundkörpers 3 angeordnet. Alternativ könnte sie zwischen dem Grundkörper 3 und der Designfolie 6 angeordnet sein.

Die Dekorblende 1 weist in beiden Ausführungsbeispielen zusätzlich eine Antireflexionsschicht 5 auf, wobei die Antireflexionsschicht 5 dafür vorgesehen ist, dass die von dem Umfeld-Detektionselement S abgegebene elektromagnetische Strahlung weitestgehend ungestört in die Dekorblende 1 eindringen kann, wobei die Antireflexionsschicht 5 auf der dem Umfeld-Detektionselement S gegenüberliegenden Innenseite B auf dem Grundkörper 3 der Dekorblende 2 angeordnet ist.

In Fig. 3 ist im Unterschied zu dem Ausführungsbeispiel gemäß Fig. 2 auf der Außenseite A der Dekorblende 1 zusätzlich eine Schutzschicht 7 oder eine Schutzfolie 7 vorgesehen.

Das Umfeld-Detektionselement S kann insbesondere ein Lidarsystem oder ein Radarsystem umfassen.

Die Dekorblende 1 ist Teil einer Frontmaske eines Fahrzeugs (vgl. Fig. 1). Alternativ kann die Dekorblende auch Teil einer Stoßfängerverkleidung oder Teil einer Türaußenverkleidung oder Teil einer Heckklappenaußenverkleidung oder Teil einer Kotflügelverkleidung oder Teil einer Kühlerverkleidung sein.

Das transparente oder transluzente Polymermaterial kann bevorzugt Polypropylen und/oder Polycarbonat und/oder Polyethylenterephthalat und/oder Acrylnitril-Butadien-Styrol und/oder Polymethylmethacrylat und/oder Polyamid umfassen.

Teil der Erfindung ist ein Fahrzeug mit einer wie vorstehend beschriebenen Außenverkleidungsteilanordnung.

Ein Verfahren zur Herstellung einer Dekorblende 1 einer vorstehend beschriebenen Außenverkleidungsteilanordnung, umfasst die folgenden Schritte:
- Bereitstellen einer Heizfolie 4;
- Bereitstellen einer Designfolie 6;
- Einbringen der Heizfolie 4 und der Designfolie 6 in eine die Dekorblende 1 definierende Kavität eines Spritzgusswerkzeugs, wobei die Designfolie 6 so in der Kavität angeordnet wird, dass diese beim Befüllen der Kavität mit einem Polymermaterial hinterspritzt wird und, wobei die Heizfolie 4 so in der Kavität angeordnet wird, dass diese beim Befüllen der Kavität mit dem Polymermaterial überspritzt wird;
- Befüllen der Kavität des Spritzgusswerkzeugs mit einem transparent oder transluzent erstarrenden Polymermaterial;
- Aushärten des Polymermaterials zur Ausbildung des Grundkörpers 3 mit den stoffschlüssig am Grundkörper 3 angeformten Folien 4, 5;
- Entnahme der Dekorblende 1 aus dem Spritzgusswerkzeug.

Als Variante kann vorgesehen sein, dass die Heizfolie 4 und/oder die Designfolie 6 vor dem Einbringen in die Kavität dreidimensional vorgeformt werden oder bereits dreidimensional vorgeformt sind.

Die beiden Folien sind so ausgebildet, dass diese für ein Spritzgussverfahren geeignet sind, sich also insbesondere stoffschlüssig mit dem Polymermaterial verbinden können (ggf. unter Verwendung von Haftvermittlern) und die entsprechenden hohen Temperaturen verkraften. Dies gilt entsprechend für die auf der Designfolie aufgebrachte (beispielsweise per Siebdruck oder per Tintenstrahldruck oder per Tampondruck oder per Digitaldruck aufgebrachten) Dekor auf der Designfolie.

## Patentansprüche

1. Außenverkleidungsteilanordnung für ein Fahrzeug, umfassend
- eine Dekorblende (1), wobei die Dekorblende (1) bei bestimmungsgemäßer Verwendung am Fahrzeug eine sichtbare Außenseite (A) und eine der Außenseite (A) gegenüberliegende Innenseite (B) aufweist und, umfassend
- ein Umfeld-Detektionselement (S), wobei die Dekorblende (1) so vor dem Umfeld-Detektionselement (S) positioniert ist, dass das Umfeld-Detektionselement (S) der Innenseite (B) der Dekorblende (1) zugewandt ist,
wobei die Dekorblende (1) aus einem flächig ausgebildeten Grundkörper (3) aus einem, für wenigsten eine Wellenlänge des sichtbaren Lichts transparenten oder transluzenten, Polymermaterial besteht,
wobei die Dekorblende (1) ferner eine mit dem Grundkörper (3) stoffschlüssig verbundene Heizfolie (4) aufweist,
**dadurch gekennzeichnet, dass**
die Dekorblende (1) zusätzlich eine ein Dekor und/oder eine Farbe der Dekorblende (1) ausbildende Designfolie (6) aufweist, wobei die Designfolie (6) so auf dem Grundkörper (3) der Dekorblende (1) stoffschlüssig angeordnet ist, dass diese von der Außenseite (A) herkommend vor der Heizfolie (4) angeordnet ist.

2. Außenverkleidungsteilanordnung nach Anspruch 1, **dadurch gekennzeichnet, dass** die Designfolie (6) auf der zur Außenseite (A) hin orientierten Seite des Grundkörpers (3) angeordnet ist.

3. Außenverkleidungsteilanordnung nach Anspruch 1 oder 2, **dadurch gekennzeichnet, dass** die Heizfolie (4) auf der zur Innenseite (B) hin orientierten Seite des Grundkörpers (3) oder zwischen dem Grundkörper (3) und der Designfolie (6) angeordnet ist.

4. Außenverkleidungsteilanordnung nach einem der vorstehenden Ansprüche, **dadurch gekennzeichnet, dass** die Dekorblende (1) zusätzlich eine Antireflexionsschicht (5) aufweist, wobei die Antireflexionsschicht (5) dafür vorgesehen ist, dass die von dem Umfeld-Detektionselement (S) abgegebene elektromagnetische Strahlung weitestgehend ungestört in die Dekorblende (1) eindringen kann, wobei die Antireflexionsschicht (5) auf der dem Umfeld-Detektionselement (S) gegenüberliegenden Innenseite (B) auf dem Grundkörper (3) der Dekorblende (2) angeordnet ist.

5. Außenverkleidungsteilanordnung nach einem der vorstehenden Ansprüche, **dadurch gekennzeichnet, dass** auf der Außenseite (A) der Dekorblende (1) eine Schutzschicht (7) oder eine Schutzfolie (7) vorgesehen ist.

6. Außenverkleidungsteilanordnung nach einem der vorstehenden Ansprüche, **dadurch gekennzeichnet, dass** das Umfeld-Detektionselement (S) ein Lidarsystem oder ein Radarsystem umfasst.

7. Außenverkleidungsteilanordnung nach einem der vorstehenden Ansprüche, **dadurch gekennzeichnet, dass** die Dekorblende (1) Teil einer Stoßfängerverkleidung oder Teil einer Türaußenverkleidung oder Teil einer Heckklappenaußenverkleidung oder Teil einer Kotflügelverkleidung oder Teil einer Frontmaske oder Teil einer Kühlerverkleidung ist.

8. Außenverkleidungsteilanordnung nach einem der vorstehenden Ansprüche, **dadurch gekennzeichnet, dass** das transparente oder transluzente Polymermaterial Polypropylen und/oder Polycarbonat und/oder Polyethylenterephthalat und/oder Acrylnitril-Butadien-Styrol und/oder Polymethylmethacrylat und/oder Polyamid umfasst.

9. Fahrzeug mit einer Außenverkleidungsteilanordnung nach einem der vorstehenden Ansprüche.

10. Verfahren zur Herstellung einer Dekorblende (1) einer Außenverkleidungsteilanordnung nach einem der vorstehenden Ansprüche 1 bis 8, umfassend die folgenden Schritte:
- Bereitstellen einer Heizfolie (4);
- Bereitstellen einer Designfolie (6);
- Einbringen der Heizfolie (4) und der Designfolie (6) in eine die Dekorblende (1) definierende Kavität eines Spritzgusswerkzeugs, wobei die Designfolie (6) so in der Kavität angeordnet wird, dass diese beim Befüllen der Kavität mit einem Polymermaterial hinterspritzt wird und, wobei die Heizfolie (4) so in der Kavität angeordnet wird, dass diese beim Befüllen der Kavität mit dem Polymermaterial überspritzt wird;
- Befüllen der Kavität des Spritzgusswerkzeugs mit einem transparent oder transluzent erstarrenden Polymermaterial;
- Aushärten des Polymermaterials zur Ausbildung des Grundkörpers (3) mit den stoffschlüssig am Grundkörper (3) angeformten Folien (4, 5);
- Entnahme der Dekorblende (1) aus dem Spritzgusswerkzeug.

11. Verfahren nach Anspruch 10, **dadurch gekennzeichnet, dass** die Heizfolie (4) und/oder die Designfolie (6) vor dem Einbringen in die Kavität dreidimensional vorgeformt werden oder bereits dreidimensional vorgeformt sind.
